# EUROPÄISCHE PATENTSCHRIFT

(11) **EP 1 023 117 B1**
(45) Veröffentlichungstag und Bekanntmachung des Hinweises auf die Patenterteilung: **20.11.2002**
(21) Anmeldenummer: 98949940.5
(22) Anmeldetag: 25.08.1998
(51) Int. Cl.: B01D 21/02, B01D 21/24, C02F 1/52

(54) **SCHWEBEFILTERANLAGE ZUR TRINKWASSERAUFBEREITUNG**
UPFLOW SLUDGE BLANKET FILTERING PLANT FOR TREATING DRINKING WATER
INSTALLATION DE REFOULEMENT DE BOUES EN NAPPE POUR TRAITER DE L'EAU POTABLE

(30) Priorität: 30.08.1997 DE 29715623 U
(43) Veröffentlichungstag der Anmeldung: 02.08.2000
(73) Patentinhaber: Dieter Eppler Wasseraufbereitung, 72250 Freudenstadt (DE)
(72) Erfinder: EPPLER, Dieter, D-72250 Freudenstadt (DE)
(74) Vertreter: KOHLER SCHMID + PARTNER
(86) Internationale Anmeldenummer: DE9802495
(87) Internationale Veröffentlichungsnummer: WO99011353

(56) Entgegenhaltungen:
- DE-B- 1 079 554
- US-A- 4 515 697
- US-A- 5 589 064

## Beschreibung

Die Erfindung betrifft eine Schwebefilteranlage ohne Trägermaterial-Füllung zur Abtrennung von partikelförmigen Verunreinigungen aus zu behandelndem Rohwasser mit mindestens einem, vorzugsweise im Querschnitt nach unten trichterförmig sich verjüngenden Reaktorbehälter, der im Bodenbereich einen Rohwasserzulauf und im oberen Bereich des Reaktorbehälters einen Klarwasserablauf aufweist, über den i.w. von den partikelförmigen Verunreinigungen befreites Klarwasser aus dem Reaktorbehälter abgezogen werden kann, wobei mit Abstand vom Boden des Reaktorbehälters ein Schlammabzug, über den im Bodenbereich des Reaktorberhälters angesammelter Schlamm aus dem Reaktorbehälter abgezogen werden kann, sowie eine Einrichtung zur Erzeugung eines negativen Geschwindigkeitssprungs in der Strömungsgeschwindigkeit des im Reaktorbehälter aufströmenden, mit partikelförmigen Verunreinigungen versetzten Rohwasser vorgesehen ist, und wobei die Einrichtung zur Erzeugung eines negativen Geschwindigkeitssprungs so ausgestaltet ist, daß sich eine Grenzschicht mit Trennung zwischen dem auf strömenden, mit partikelförmigen Verunreinigungen versetzten Rohwasser und darüber aufströmendem Klarwasser einstellt.

Eine solche Schwebefilteranlage ist bekannt aus der DE-PS 1 079 554.

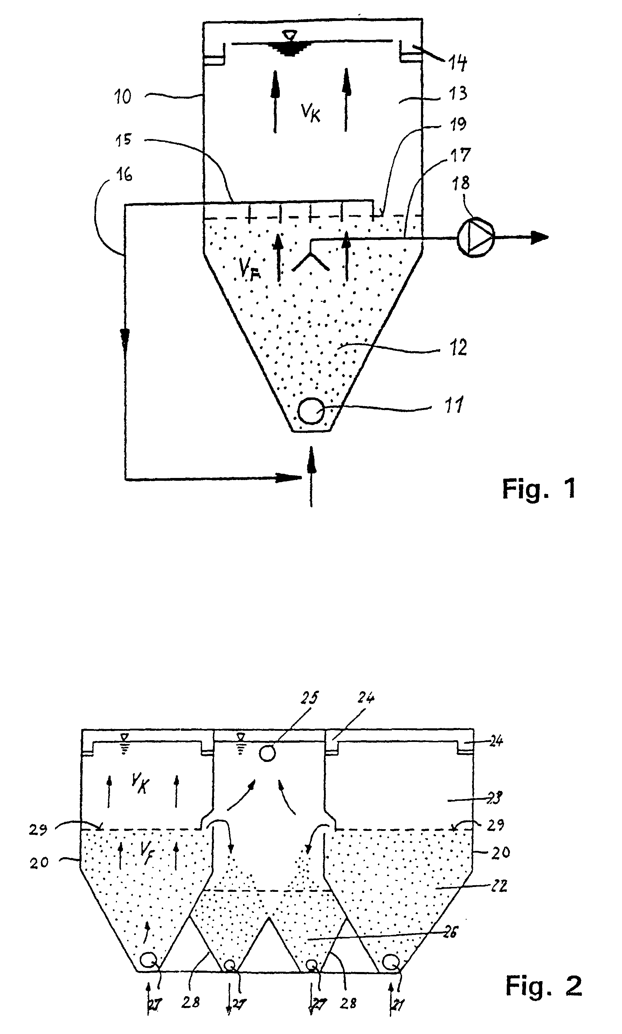

Im östlichen Europa werden häufig Schwebefilteranlagen vom Typ "Korridor" eingesetzt. Bei einer derartigen Anlage, wie sie z.B. aus W. A. Kljatschko, "Erfahrungen beim Bau und Betrieb von Schlammkontaktanlagen zur Wasseraufbereitung", WWT, 10. Jg. (1960), Heft 3, S. 109 bekannt ist und unten anhand der Figur 2 beschrieben wird, gelangt das zu behandelnde Wasser durch eine Rohwasserverteilungsleitung von unten in den Bodenbereich eines trichterförmigen Aufstromreaktors. Durch vorherige Zugabe von Flockungsmitteln bilden sich Flocken von partikelförmigen Verunreinigungen im Wasser im unteren Trichterbereich. Da diese Flocken geringfügig schwerer sind als das Wasser, sammeln sie sich hauptsächlich im unteren Teil des Trichters an.

Um ein Aufströmen der Flocken in die Klarwasserzone im oberen Bereich des Aufstromreaktors zu verhindern, wird ein Geschwindigkeitssprung in der Strömungsgeschwindigkeit des Wassers von ca. 10 bis 20 % erzeugt, indem aus dem trichterförmigen Aufstromreaktor in einer bestimmten Höhe mit Abstand vom Boden ein Teilabfluß des strömenden Wassers in ein zweites Korridorsystem ermöglicht wird, das ungefähr 10 % der Oberfläche der erstgenannten Kammer aufweist. Dadurch wird die Geschwindigkeit v_{F} des aus dem Rohwasserzulauf aufströmenden Rohwassers in der Klarwasserzone im oberen Bereich des Reaktorbehälters auf eine ca. 10 bis 20 % niedrigere Aufströmgeschwindigkeit v_{K} verringert. Durch diesen Geschwindigkeitssprung soll eine möglichst scharfe Trennung zwischen den Flocken und dem Klarwasser hervorgerufen werden, so daß sich in der entsprechenden Höhe des Reaktorbehälters ein Flockenspiegel bildet und in der Klarwasserzone möglichst keine Flocken mehr vorhanden sind.

Aus dem zweiten Korridorsystem wird dann der von den abgesunkenen Flocken im Bodenbereich gebildete Überschußschlamm nach unten abgezogen. Der Reinigungsgrad dieses Verfahrens soll laut Literatur (G. Fischer, "Beitrag zum Schwebefilterverfahren - seine Wirkungsweise bei der Enteisenung von Grundwasser", KDT Dresden, veröffentlicht in BWT, 17. Jg. (1967), Heft 4) etwa 70 bis 80 % betragen. Dieses System wird weitgehend in allen Ländern Osteuropas in den dortigen Wasserwerken als Flockungs- und Vorreinigungsstufe verwendet. Es kann auch als Enthärtungs- und Aufhärtungsstufe eingesetzt werden.

In dem oben zitierten Artikel von Fischer (1967) ist jedoch im letzten Absatz vermerkt, daß das Verfahren "wegen der technologisch bedingten Störanfälligkeit aber nur dort angewendet werden sollte, wo ein annähernd konstanter Betrieb ohne kurzfristige Schwankungen der Wasserqualität und -menge zu erwarten ist".

Die Ursache dieses technologischen Mangels liegt darin, daß der Schlammabzug mit den Schlammabzugsrohren aus dem Überschußschlammbecken in Ermangelung von Schiebern im Rohwasserzulauf, die die Behälter einer jeden Korridoreinheit voneinander trennen würden, auch eine Absenkung des Wasserspiegels im jeweiligen Zulaufbecken verursacht, da die Behälter hydraulisch miteinander verbunden sind.

In der Flockenschicht im oberen Drittel des Trichters findet beim Schlammentfernen eine Umkehr der Beschleunigung der Fließrichtung und der Flockenschicht hin zum seitlich gelegenen Schlammabzug statt. Dies hat zur Folge, daß die vorherige klare Trennung zwischen Flocken und Klarwasserschicht wieder aufgehoben wird und sich in der vormaligen Klarwasserzone eine Flockenwolke bildet.

Zwar hatte man ursprünglich bei den Anlagen Handschieber im Rohwasserzulauf vorgesehen, die jedoch in der Folge praktisch nie betätigt wurden, da man für ein einmaliges Schlammabziehen bei einer derartigen Anlage zwischen 16 und 22 Schieber hätte bedienen müssen, was einen erheblichen Mehraufwand verursacht und den Wasserwerksbetrieb beeinträchtigt hätte. Aufgrund der hydraulischen Verbindung der einzelnen Korridoreinheiten hat jedoch diese Vorgehensweise zur Folge, daß während des Schlammabzugs kein Klarwasser mehr im gesamten System überläuft, so daß während der Zeit der Entschlammung die weitere Wasserwerksbeschickung mit Wasser der nachfolgenden Reinigungsstufen jeweils unterbrochen ist.

Derartige Schwebefiltereinheiten vom Typ "Korridor" wurden bis zum Jahre 1989 immer nach dem gleichen System in allen Ländern Osteuropas hergestellt, sind bis zum heutigen Tag noch in Betrieb und leiden an der in der obigen Veröffentlichung erwähnten technologisch bedingten Störanfälligkeit. Grundlegende Verbesserungen wurden seitdem nicht durchgeführt.

Die in den Ländern Osteuropas üblichen Wasserwerke erreichen aufgrund der vorgenannten hydraulischen Schwierigkeiten ihre vorgesehene maximale Ausbauwassermenge nicht, sondern lediglich Werte bis etwa 60 bis 70 % derselben. Viele derartige Anlagen haben derzeit nur eine mögliche Kapazität im Schwebeverfahren von ca. 50 %.

In der DE 74 39 432 U1 ist ein Ruhebecken zum Absetzen von Schwebstoffen mit einer Entnahmevorrichtung zur automatischen optischen Überwachung der Wasserqualität beschrieben. Die bekannte Vorrichtung wird jedoch im Gegensatz zur gattungsbildenden Schwebefilteranlage diskontinuierlich betrieben und beruht auf einem völlig anderen physikalischen Prinzip, nämlich dem Absetzen, der Aufkonzentration und dem anschließenden Abzug von verdicktem Schlamm aus dem Bodenbereich des Ruhebeckens nach unten weg. Ein Rohwasserzulauf im Bodenbereich ist im Gegensatz zu einer Schwebefilteranlage nicht vorgesehen, sondern im Gegenteil ein Rohwasserzulauf von oben in eine in das Becken ragende Filtervorrichtung. Eine Trennung von Klarwasser und Schlammwasser durch einen definierten Geschwindigkeitssprung kann bei dieser Art von Anlage aus physikalischen Gründen niemals auftreten, da nicht einmal ein negativer Geschwindigkeitsgradient des strömenden Wassers in der richtigen Richtung, nämlich nach oben, auftritt, weil das Rohwasser von oben nach unten zugeführt wird und zunächst keine Abströmmöglichkeit vorfindet.

In der DE 40 06 689 A1 ist eine Vorrichtung zur Erfassung der Qualität von Abwässern beschrieben, die mit Schwebefilteranlagen der eingangs beschriebenen gattungsbildenden Art nichts zu tun hat. Insbesondere wird hier keine definierte Trennung von Rohwasser und Klarwasser mittels eines Geschwindigkeitssprungs des einströmenden Rohwassers bewirkt.

Ebenfalls auf einer völlig anderen Technologie beruht die in der US 4,515,697 beschriebene Schwimmkornfilter-Anlage zur Flockulation von Mikroorganismen. Im Gegensatz zu einer gattungsbildenden Schwebefilteranlage mit in der Schwebe gehaltener Schlamm-Suspension, bei der die Geschwindigkeit des zu behandelnden, von unten nach oben aufströmenden Wassers im oberen Bereich des Reaktorbehälters verlangsamt wird, damit sich eine definierte Grenzschicht von Flocken und Klarwasser bilden kann, wird bei der bekannten Schwimmkornfilter-Anlage Rohwasser sowie ein aus dem Klarwasserbereich abgezweigter Teilstrom mit hoher kinetischer Energie von unten nach oben durch das Schwimmkornfilter gepresst, wobei eine trägerfixierte Filterung stattfindet. Anstelle einer Strömungsverlangsamung wird bei der Schwimmkornfilter-Technologie im Top-Bereich des Reaktorgefäßes ein Hochgeschwindigkeitsdurchfluß erzeugt. Eine Grenzschicht zwischen Schlammwasser und Klarwasser kann sich damit keinesfalls ausbilden. Außerdem wird bei der bekannten Schwimmkornfilter-Anlage ein Schlamm-Coating, welches sich oberhalb der Schwimmkornfüllung ausbildet, im oberen Bereich des Reaktorbehälters in der Nähe der Klarwasserzone abgezogen, während bei einer gattungsgemäßen Schwebefilteranlage ein Abzug von Schlamm erfolgt, der sich im Bodenbereich des Reaktorbehälters angesammelt hat.

Aus der US 5,589,064 schließlich ist eine Einrichtung zum Abscheiden von Verunreinigungen aus Flüssigkeiten oder Abwasser bekannt, bei der die zu behandelnde Flüssigkeit im Aufstrom einem Reaktorbehälter zugeführt wird, in dessen oberen Bereich Parallelplatten zum Anlagern von Schlamm vorgesehen sind. Dabei erfolgt durch eine Querschnittserweiterung und das Angebot einer großen Fläche eine Geschwindigkeitsreduktion der auf strömenden Flüssigkeit, die allerdings allmählich und nicht sprunghaft stattfindet, so daß sich keine definierte Grenzschicht zwischen Schlammwasser und Klarwasser wie bei einer gattungsgemäßen Schwebefilteranlage ausbilden kann. Der Schlammabzug erfolgt bei der bekannten Parallelplattenabscheider-Anlage außerdem nicht aus dem Bodenbereich des Reaktorbehälters, sondern diskontinuierlich durch Anhalten des Prozesses und Abspülen des abgeschiedenen Schlammes von den Parallelplatten.

Aufgabe der vorliegenden Erfindung ist es demgegenüber, eine Schwebefilteranlage der eingangs beschriebenen Art dahingehend zu verbessern, daß die obengenannten technologischen Mängel behoben sind und die Durchflußkapazität des Wasserwerks auf die vorgesehene Ausbauwassermenge von 100 % gesteigert werden kann.

Erfindungsgemäß wird auf ebenso überraschend einfache wie wirkungsvolle Art und Weise diese Aufgabe dadurch gelöst, daß zwischen dem Schlammabzug und dem Klarwasserablauf im Bereich der Grenzschicht eine Einrichtung zum Abzug von noch teilweise verunreinigtem Wasser aus einem Bereich unterhalb der Grenzschicht und zur Teilstromrückführung in den Rohwasserzulauf angeordnet ist.

Durch diese Maßnahme wird im Reaktorbehälter aufgrund des Abzuges von noch teilweise verunreinigtem Wasser mittels der Abzugseinrichtung, welches einer Teilstromrückführung zugeführt wird, in der entsprechenden Behälterhöhe ein definierter Sprung der nach oben gerichteten Strömungsgeschwindigkeit des Wassers bewirkt, der zu einer scharfen Grenzschicht (Flockenspiegel) zwischen Klarwasser und Schlammwasser führt. Dadurch kann der Schlammabzug aus dem Bereich unterhalb der Einrichtung immer an der gleichen Stelle erfolgen, während es bei der Anlage nach der eingangs zitierten, gattungsbildenden DE-PS 1 079 554 mehr oder weniger dem Zufall überlassen bleibt, wo und ob überhaupt ein definierter Flokkenspiegel erzeugt wird. Daher ist auch eine variable Entnahmehöhe des Schlammabzugs, wie dies bei der Einrichtung nach DE-PS 1 079 554 unerläßlich ist, bei der Schwebefilteranlage nach der vorliegenden Erfindung überflüssig. Der Schlammabzug kann also ebenso wie die Einrichtung starr an einer festen Stelle im Reaktorbehälter eingebaut sein, wobei immer sichergestellt ist, daß aufgrund der definierten Höhe des durch den Geschwindigkeitssprung im aufströmenden Wasser erzeugten Flockenspiegels, insbesondere durch den definiert immer unterhalb dieser Grenzschicht erfolgenden Abzugs von Schlamm einerseits niemals Klarwasser aus dem Reaktorbehälter in den Schlammabzug gelangt, was bei der Einrichtung nach DE-PS 1 079 554 dann passiert, wenn der Flockenspiegel unkontrolliert in eine Region unterhalb des Schlammabzuges abgesunken ist (und was dann eine Nachführung der Entnahmehöhe des Schlammabzugs erforderlich macht). Andererseits kann bei der Schwebefilteranlage nach der vorliegenden Erfindung der Flockenspiegel auch niemals in die Region des Klarwasserablaufes ansteigen, wodurch schlammverschmutztes Wasser in das Klarwassersystem gelangen würde. Auch dieses ist bei der bekannten Einrichtung nach der DE-PS 1 079 554 keinesfalls sichergestellt.

Ein weiterer Vorteil der erfindungsgemäßen Teilstromrückführung liegt außerdem darin, daß bei gleichbleibender Größe des Reaktorbehälters ein konstanter Reinigungsgrad des in den Klarwasserablauf gelangenden Wassers dadurch sichergestellt werden kann, daß je nach Verschmutzungsgrad des durch den Rohwasserzulauf gelangenden Wassers mehr oder weniger große Mengen an verunreinigtem Wasser einer Nachbehandlung durch Entnahme über die Abzugseinrichtung und die Teilstromrückführung zugeführt werden können.

Auf diese Weise können einerseits die Reaktorbehälter hydraulisch entkoppelt werden, so daß bei etwa auftretenden Störungen in einem Behälter keine negativen Auswirkungen auf den Betrieb der anderen Behälter zu befürchten sind, andererseits kann auf das zweite Korridorsystem bei einer Schwebefilteranlage vom Typ "Korridor" als Schlammabzugskammer verzichtet werden. Es sind nur noch ausschließlich Korridorschwebefiltereinheiten erforderlich. Durch diese technischen Änderungen entstehen beim Neubau einer solchen Anlage nur ungefähr die halben Herstellungskosten. Der Betrieb der Anlage bleibt auch während des Schlammabzugs aus einem der Behälter stabil. Bei bestehenden Anlagen lassen sich die Kapazitäten mit der erfindungsgemäßen Neuerung um ca. 30 bis 50 % steigern und die Ablaufqualität des Klarwassers bei Schlammabzug wird um ca. 50 % verbessert.

Vorzugsweise ist der Schlammabzug bei etwa 1/4 bis 1/2 der Höhe des Reaktorbehälters, in der Regel bei etwa 1/3 der Behälterhöhe angeordnet, also ungefähr in dem Bereich, in dem der trichterförmige untere Teil des Reaktorbehälters in einen Beckenbereich mit nach oben hin konstantem Querschnitt übergeht.

Bei einer weiteren bevorzugten Ausführungsform ist die Einrichtung zum Abzug von noch teilweise verunreinigtem Wasser kurz über dem Schlammabzug, vorzugsweise bei etwa der halben Höhe des Reaktorbehälters angeordnet, wo sich aufgrund des von der Teilstromrückführung hervorgerufenen Geschwindigkeitssprunges dann auch der Flockenspiegel einstellt. Ungefähr in diesem Bereich ist bei bekannten Schwebefilteranlagen auch der Überlauf zur jeweiligen Schlammabzugskammer des zweiten Korridorsystems angeordnet.

Besonders bevorzugt ist eine Ausführungsform der erfindungsgemäßen Schwebefilteranlage, bei der eine Vorrichtung zur Volumenstromregelung des rückgeführten Teilstroms von noch teilweise verunreinigtem Wasser in Abhängigkeit von Zuflußwassermenge und Ablaufqualität vorgesehen ist. Damit wird ein Schwebefilterbetrieb mit variablem Durchfluß optimal ermöglicht. Demgegenüber hatten die bekannten Schwebefilteranlagen aufgrund der technischen Vorgaben nur in einem sehr begrenzten Maß die Möglichkeit, sich einer schwankenden Durchflußmenge anzupassen.

Vorteilhafterweise wird bei Ausführungsformen der Erfindung der Schlammabzug aus dem Korridorfilter über eine Schlammabzugspumpe bewirkt.

Bei besonders bevorzugten Weiterbildungen dieser Ausführungsform ist die Schlammabzugspumpe über eine Zeitschaltuhr ein- bzw. ausschaltbar.

Alternativ oder ergänzend läßt sich die Menge des abgezogenen Schlammes aber auch über einen Schlammabzugsschieber einstellen, der den Volumenstrom des abzuziehenden Schlammes begrenzt und bei Weiterbildungen ebenfalls mit einer Zeitschaltuhr verbunden sein kann.

Besonders bevorzugt ist jedoch eine Weiterbildung dieser Ausführungsform, bei der eine Einrichtung zur Ermittlung der Höhe der Grenzschicht zwischen Klarwasser und Schlammwasser, also der Höhe des jeweiligen Flockenspiegels, mit dem Schlammabzugsschieber verbunden ist.

Ein erheblicher Vorteil der erfindungsgemäßen Schwebefilteranlage gegenüber bekannten Anlagen vom Typ "Korridor" besteht unter anderem auch darin, daß sich die Form der Reaktorbehälter nicht auf die bisher verwendeten Rechteckbecken beschränkt, sondern daß der Reaktorbehälter auch einen runden Querschnitt aufweisen kann. Derartige Rundbecken sind bei Wasserwerken in der Regel vorhanden und werden bislang beispielsweise als Absetzbecken genutzt. Durch einfache Umbauten der oben beschriebenen Art können diese nunmehr auch als Schwebefilterreaktoren eingesetzt werden.

In den Rahmen der Erfindung fällt auch ein Verfahren zur Abtrennung von partikelförmigen Verunreinigungen aus zu behandelndem Rohwasser in einer Schwebefilteranlage ohne Trägermaterial-Füllung , bei dem im Betrieb ein negativer Geschwindigkeitssprung in der Strömungsgeschwindigkeit von in einem Reaktorbehälter aufströmendem Rohwasser erzeugt wird, wodurch sich eine Grenzschicht mit Trennung zwischen dem aufströmenden, mit partikelförmigen Verunreinigungen versetzten Rohwasser und darüber auf strömendem Klarwasser einstellt, wobei oberhalb der Grenzschicht Klarwasser und unterhalb derselben im Bodenbereich des Reaktorbehälters angesammelter Schlamm abgezogen wird, und wobei sich das Verfahren dadurch auszeichnet, daß ein Teilstrom des aufsteigenden, verunreinigten Rohwassers kurz unterhalb der Grenzschicht abgezogen und im Bodenbereich dem Reaktorbehälter wieder zugeführt wird, und daß durch die Wahl des Volumenstroms von zur Teilstromrückführung abgezogenem, noch teilweise verunreinigtem Wasser, ein definierter Geschwindigkeitssprung in der aufwärts gerichteten Strömungsgeschwindigkeit des vom Behälterboden her einströmenden Wassers bewirkt wird, wodurch sich die Grenzschicht scharf in einem definierten Abstand vom Behälterboden ausbildet.

Vorzugsweise wird der Volumenstrom von zur Teilstromrückführung abgezogenem Wasser bei etwa 10 bis 20 %, insbesondere bei etwa 15 % des Volumenstroms des einströmenden Rohwassers eingestellt. Damit wird ein Geschwindigkeitssprung im Bereich von 10 bis 20 % erreicht, der im Verfahren eine klare Trennung zwischen der Flockungszone und der Klarwasserzone bewirkt.

Besonders bevorzugt ist auch eine Verfahrensvariante, bei der die Schlammabzugspumpe zu bestimmten Zeiten, vorzugsweise einmal am Tag, und für eine vorgegebene Zeitdauer, beispielsweise 1 Stunde über die Zeitschaltuhr eingeschaltet wird. Versuche haben gezeigt, daß ein derartiger einmaliger Schlammabzug pro Tag unter normalen Betriebsverhältnissen durchaus ausreichend ist.

Es ist aber auch möglich, mit voreingestellten Schlammabzugsmengen jeweils einen bestimmten Volumenstrom an Schlamm abzuziehen, was bei entsprechender Einstellung eine Störung des Flockungsschwebebettes verhindert. Damit ist ein ungestörter Betrieb der Anlage mit gleichmäßiger Ablaufqualität gesichert.

Bei einer weiteren vorteilhaften Verfahrensvariante wird der Schlammabzugsschieber von der Einrichtung zur Ermittlung der Grenzschichthöhe derart angesteuert, daß der Flockungsspiegel automatisch auf einer konstanten Höhe im Reaktorbehälter gehalten wird. Dadurch wird der Betrieb der Anlage extrem gleichmäßig und die Ablaufqualität des Klarwassers besonders hoch.

Für einen Betrieb der erfindungsgemäßen Schwebefilteranlage mit variablen Wassermengen ist es vorteilhaft, wenn bei Änderung des Volumenstroms von zur Teilstromrückführung abgezogenem Wasser automatisch der Volumenstrom des in den Reaktorbehälter einströmenden Rohwassers angepaßt wird und umgekehrt.

Durch die obigen erfindungsgemäßen Vorschläge wird insbesondere bei Neubauten einer Schwebefilteranlage eine erhebliche bauliche Vereinfachung und damit Verbilligung der Anlage erzielt. Die erfindungsgemäße Anlage kann auch als Klarreinigungsstufe im Abwasserwesen als Alternative zu einem Nachklärbecken eingesetzt werden. Das Einsatzspektrum der Schwebefilteranlage wird durch die erfindungsgemäßen Modifikationen ganz enorm erweitert.

Weitere Vorteile der Erfindung ergeben sich aus der Beschreibung und der Zeichnung.

Die Erfindung ist in Figur 1 der Zeichnung dargestellt und wird anhand von Ausführungsbeispielen näher erläutert. Es zeigen:
- Fig. 1: einen schematischen Vertikalschnitt durch eine erfindungsgemäße Schwebefilteranlage; und
- Fig. 2: einen schematischen Vertikalschnitt durch eine Schwebefilteranlage vom Typ "Korridor" nach dem Stand der Technik.

Die in Fig. 1 dargestellte erfindungsgemäße Schwebefilteranlage umfaßt einen Reaktorbehälter 10, der den üblichen rechteckigen Querschnitt, aber auch einen runden Querschnitt aufweisen kann. Zur Abtrennung von partikelförmigen Verunreinigungen wird zu behandelndes Rohwasser über einen Rohwasserzulauf 11 im Bodenbereich des Reaktorbehälters 10, der trichterförmig verjüngt ist, mit einer Hauptgeschwindigkeitskomponente nach oben eingeströmt. Durch Zugabe von Flockungsmitteln bilden sich Flocken der partikelförmigen Verunreinigungen des Rohwassers, die sich in einer Flokkungszone 12 im unteren Behälterbereich sammeln.

Mit deutlichem Abstand vom Boden des Reaktorbehälters 10, vorzugsweise etwa auf der halben Höhe des Reaktors oberhalb des Bereichs, in dem die Trichterform in einen konstanten Querschnitt übergeht, ist eine Einrichtung 15 zum Abzug von noch teilweise verunreinigtem Wasser aus dem Reaktorbehälter 10 vorgesehen. Das abgezogene Wasser wird einer Teilstromrückführung 16 zugeführt, die den Teilstrom dem Rohwasserzulauf 11 wieder zuführt.

Durch den Abzug von etwa 10 bis 20 % des in den Reaktorbehälter 10 einströmenden Rohwasservolumens in die Teilstromrückführung 16 wird in der entsprechenden Behälterhöhe ein Geschwindigkeitssprung von ebenfalls etwa 10 bis 20 % zwischen der Geschwindigkeit v_{F} des nach oben strömenden Wassers in der Flockungszone 12 und der Geschwindigkeit v_{K} des in eine Klarwasserzone 13 im oberen Bereich des Behälters 10 strömenden Wassers bewirkt. Auf diese Weise entsteht ein Flockenspiegel 19, der eine relativ scharfe Trennungsebene zwischen verschmutztem Wasser im unteren Bereich des Reaktorbehälters 10 und gereinigtem Wasser in der Klarwasserzone 13 definiert. Das erzeugte Klarwasser kann durch den Klarwasserablauf 14 ablaufen bzw. abgezogen werden.

Je nach Bedarf kann der ausgeflockte Schlamm unterhalb des Flockenspiegels 19 durch einen mit Abstand vom Boden des Reaktors angeordneten Schlammabzug 17, vorzugsweise mittels einer Schlammabzugspumpe 18 aus der Flockungszone 12 abgezogen werden. Vorzugsweise ist der Schlammabzug 17 bei etwa 1/4 bis 1/2 der Höhe des Reaktorbehälters, insbesondere bei ungefähr 1/3 der Behälterhöhe, in jedem Fall aber unterhalb der Einrichtung 15 und unterhalb des Flockenspiegels 19 angeordnet.

Bei in der Zeichnung nicht dargestellten Ausführungsformen können auch insbesondere elektrisch, pneumatisch oder hydraulisch betätigte, vorzugsweise ferngesteuerte Schieber zur Regulierung des Volumenstroms des zulaufenden Rohwassers und/oder des abgezogenen Schlammes und/oder des abgezogenen Teilstroms von noch teilweise verunreinigtem Wasser und/oder des abgezogenen Klarwassers vorhanden sein.

Vorzugsweise ist auch eine in der Zeichnung nicht dargestellte Zeitschaltuhr vorhanden, mit der die entsprechenden Schieber zu bestimmten, voreingestellten Zeiten betätigt werden können. Ebenfalls in der Zeichnung nicht dargestellt ist eine Einrichtung zur Ermittlung der Höhe des Flockenspiegels 19 über dem Boden des Reaktorbehälters 10, die in Verbindung mit der Ansteuerung der Schlammabzugspumpe 18 und/oder eines entsprechenden Schlammabzugsschiebers dazu verwendet werden kann, die Grenzschichthöhe automatisch konstant zu halten.

Zur Verdeutlichung der Unterschiede zwischen der erfindungsgemäßen Schwebefilteranlage und einer Schwebefilteranlage nach dem Stand der Technik vom Typ "Korridor" ist die letztere schematisch in Fig. 2 dargestellt:
Die bekannte Anlage weist mehrere Reaktorbehälter 20 auf, die über Rohwasserzuläufe 21 mit zu behandelndem Wasser beschickt werden. Durch seitlichen Ablauf eines Teiles des Rohwassers in neben den Reaktorbehältern 20 angeordneten Schlammabzugskammern 28 wird ein Geschwindigkeitssprung und damit ein Flockenspiegel 29 erzeugt, der eine Flockenzone 22 von einer Klarwasserzone 23 im oberen Bereich des Reaktorbehälters 20 trennt. Über Klarwasserabläufe 24 sowie einen Klarwasserabzug 25 kann das behandelte Wasser aus der bekannten Schwebefilteranlage abgezogen werden. Im Bodenbereich der Schlammabzugskammern 28 sind jeweils Schlammabzüge 27 vorgesehen, über die der eingedickte Schlamm 26 aus den Schlammabzugskammern 28 entfernt werden kann.

## Patentansprüche

1. Schwebefilteranlage ohne Trägermaterial-Füllung zur Abtrennung von partikelförmigen Verunreinigungen aus zu behandelndem Rohwasser mit mindestens einem, vorzugsweise im Querschnitt nach unten trichterförmig sich verjüngenden Reaktorbehälter (10), der im Bodenbereich einen Rohwasserzulauf (11) und im oberen Bereich des Reaktorbehälters (10) einen Klarwasserablauf (14) aufweist, über den von den partikelförmigen Verunreinigungen befreites Klarwasser aus dem Reaktorbehälter (10) abgezogen werden kann, wobei mit Abstand vom Boden des Reaktorbehälters (10) ein Schlammabzug (17), über den im Bodenbereich des Reaktorberhälters (10) angesammelter Schlamm aus dem Reaktorbehälter (10) abgezogen werden kann, sowie eine Einrichtung zur Erzeugung eines negativen Geschwindigkeitssprungs in der Strömungsgeschwindigkeit des im Reaktorbehälter (10) aufströmenden, mit partikelförmigen Verunreinigungen versetzten Rohwasser vorgesehen ist, und wobei die Einrichtung zur Erzeugung eines negativen Geschwindigkeitssprungs so ausgestaltet ist, daß sich eine Grenzschicht (19) mit Trennung zwischen dem aufströmenden, mit partikelförmigen Verunreinigungen versetzten Rohwasser und darüber aufströmendem Klärwasser einstellt,
**dadurch gekennzeichnet,**
**daß** zwischen dem Schlammabzug (17) und dem Klarwasserablauf (14) im Bereich der Grenzschicht (19) eine Einrichtung (15) zum Abzug von noch teilweise verunreinigtem Wasser aus einem Bereich unterhalb der Grenzschicht (19) und zur Teilstromrückführung in den Rohwasserzulauf (11) angeordnet ist.

2. Schwebefilteranlage nach Anspruch 1, **dadurch gekennzeichnet, daß** der Schlammabzug (17) bei etwa 1/4 bis 1/2 der Höhe des Reaktorbehälters (10), vorzugsweise bei ungefähr 1/3 der Behälterhöhe angeordnet ist.

3. Schwebefilteranlage nach Anspruch 1 oder 2, **dadurch gekennzeichnet, daß** die Einrichtung (15) zum Abzug von noch teilweise verunreinigtem Wasser kurz über dem Schlammabzug (17), vorzugsweise bei etwa der halben Höhe des Reaktorbehälters (10) angeordnet ist.

4. Schwebefilteranlage nach einem der vorhergehenden Ansprüche, **dadurch gekennzeichnet, daß** eine Vorrichtung zur Volumenstromregelung des rückgeführten Teilstroms von noch teilweise verunreinigtem Wasser vorgesehen ist.

5. Schwebefilteranlage nach einem der vorhergehenden Ansprüche, **dadurch gekennzeichnet, daß** eine Schlammabzugspumpe (18) an den Schlammabzug (17)angeschlossen ist.

6. Schwebefilteranlage nach Anspruch 5, **dadurch gekennzeichnet, daß** die Schlammabzugspumpe (18) über eine Zeitschaltuhr ein- bzw. ausschaltbar ist.

7. Schwebefilteranlage nach einem der vorhergehenden Ansprüche, **dadurch gekennzeichnet, daß** ein Schlammabzugsschieber vorgesehen ist, der den Volumenstrom des abzuziehenden Schlammes begrenzen kann.

8. Schwebefilteranlage nach Anspruch 7, **dadurch gekennzeichnet, daß** eine Einrichtung zur Ermittlung der Höhe der Grenzschicht (19) zwischen Klarwasser und Schlammwasser mit dem Schlammabzugsschieber verbunden ist.

9. Schwebefilteranlage nach einem der vorhergehenden Ansprüche, **dadurch gekennzeichnet, daß** der Reaktorbehälter (10) einen runden Querschnitt aufweist.

10. Verfahren zur Abtrennung von partikelförmigen Verunreinigungen aus zu behandelndem Rohwasser in einer Schwebefilteranlage ohne Trägermaterial-Füllung bei dem im Betrieb ein negativer Geschwindigkeitssprung in der Strömungsgeschwindigkeit von in einem Reaktorbehälter (10) aufströmendem Rohwasser erzeugt wird, wodurch sich eine Grenzschicht (19) mit Trennung zwischen dem aufströmenden, mit partikelförmigen Verunreinigungen versetzten Rohwasser und darüber aufströmendem Klarwasser einstellt, wobei oberhalb der Grenzschicht (19) Klarwasser und unterhalb derselben im Bodenbereich des Reaktorbehälters (10) angesammelter Schlamm abgezogen wird,
**dadurch gekennzeichnet,**
**daß** ein Teilstrom des aufsteigenden, verunreinigten Rohwassers kurz unterhalb der Grenzschicht (19) abgezogen und im Bodenbereich dem Reaktorbehälter (10) wieder zugeführt wird, und daß durch die Wahl des Volumenstroms von zur Teilstromrückführung abgezogenem, noch teilweise verunreinigtem Wasser, ein definierter Geschwindigkeitssprung in der aufwärts gerichteten Strömungsgeschwindigkeit des vom Behälterboden her einströmenden Wassers bewirkt wird, wodurch sich die Grenzschicht (19) scharf in einem definierten Abstand vom Behälterboden ausbildet.

11. Verfahren nach Anspruch 10, **dadurch gekennzeichnet, daß** der Volumenstrom von zur Teilstromrückführung abgezogenem Wasser bei etwa 10 bis 20 %, vorzugsweise bei etwa 15 % des Volumenstroms des einströmenden Rohwassers eingestellt wird.

12. Verfahren nach Anspruch 10 oder 11 in Verbindung mit Anpruch 6, **dadurch gekennzeichnet, daß** die Schlammabzugspumpe (18) zu bestimmten Zeiten, vorzugsweise einmal am Tag, und für eine vorgegebene Zeitdauer, beispielsweise 1 Stunde über die Zeitschaltuhr eingeschaltet wird.

13. Verfahren nach Anspruch 10 oder 11 in Verbindung mit Anspruch 7, **dadurch gekennzeichnet, daß** ein fest eingestellter Volumenstrom an Schlamm abgezogen wird.

14. Verfahren nach Anspruch 10 oder 11 in Verbindung mit Anspruch 8, **dadurch gekennzeichnet, daß** der Schlammabzugsschieber von der Einrichtung zur Ermittlung der Höhe des Flockenspiegels (19) derart angesteuert wird, daß die Grenzschichthöhe automatisch konstant gehalten wird.

15. Verfahren nach einem der Ansprüche 10 bis 14, **dadurch gekennzeichnet, daß** bei Änderung des Volumenstroms von zur Teilstromrückführung abgezogenem Wasser automatisch der Volumenstrom des in den Reaktorbehälter (10) einströmenden Rohwassers angepaßt wird und umgekehrt.

16. Verwendung der Schwebefilteranlage nach einem der Ansprüche 1 bis 9 als Klarreinigungsstufe in einer Abwasserbehandlungsanlage anstelle eines Nachklärbeckens.

## Claims

1. Upflow sludge blanket filtering plant without carrier material filling for separating particle-shaped impurities from untreated water to be treated with at least one reactor container (10) which preferably has a cross-section tapering like a funnel towards the bottom, and an untreated water inlet (11) in the bottom region and a clear water discharge (14) in the upper region of the reactor container (10) via which clear water freed from the particle-shaped impurities can be discharged from the reactor container (10) wherein at a separation from the bottom of the reactor container (10), a sludge discharge (17) is provided via which sludge accumulated in the bottom region of the reactor container (10) can be discharged from the reactor container (10), and a means for generating a negative speed jump in the flow velocity of the untreated water fluidised in the reactor container (10) and being clogged with particle-shaped impurities, and wherein the means for producing a negative speed jump is formed such that a border layer (19) is formed with separation between the fluidised untreated water clogged with particle-shaped impurities and clear water fluidised thereabove,
**characterized in that**
between the sludge discharge (17) and the clear water discharge (14) in the region of the border layer (19), a means (15) is disposed for discharging still partially soiled water from a region below the border layer (19) and for return of part of the flow into the untreated water inlet (11).

2. Upflow sludge blanket filtering plant according to claim 1, **characterized in that** the sludge discharge (17) is disposed at approximately 1/4 to 1/2 of the level of the reactor container (10), preferably at approximately 1/3 of the container height.

3. Upflow sludge blanket filtering plant according to claim 1 or 2, **characterized in that** the means (15) for discharging partially still soiled water is disposed immediately above the sludge discharge (17), preferably at approximately half the height of the reactor container (10).

4. Upflow sludge blanket filtering plant according to any one of the preceding claims, **characterized in that** a device is provided for regulating the volume flow of the returned partial flow of still partially soiled water.

5. Upflow sludge blanket filtering plant according to any one of the preceding claims, **characterized in that** a sludge discharge pump (18) is connected to the sludge discharge (17).

6. Upflow sludge blanket filtering plant according to claim 5, **characterized in that** the sludge discharge pump (18) can be switched on or off via a timer.

7. Upflow sludge blanket filtering plant according to any one of the preceding claims, **characterized in that** a sludge discharging slider is provided for limiting the volume flow of the sludge to be discharged.

8. Upflow sludge blanket filtering plant according to claim 7, **characterized in that** a means for determining the height of the border layer (19) between clear water and sludge water is connected to the sludge discharging slider.

9. Upflow sludge blanket filtering plant according to any one of the preceding claims, **characterized in that** the reactor container (10) has a round cross-section.

10. Method for separating particle-shaped impurities from untreated water to be treated in an upflow sludge blanket filtering plant without carrier material filling wherein during operation a negative speed jump is generated in the flow velocity of untreated water fluidised in a reactor container (10) thereby producing a border layer (19) with separation between the fluidised untreated water clogged with particle-shaped impurities and clear water fluidised thereabove, wherein clear water is discharged above the border layer (19) and accumulated sludge is discharged below the border layer (19) in the bottom region of the reactor container (10),
**characterized in that**
a partial flow of the rising soiled untreated water is discharged immediately below the border layer (19) and is returned in the bottom region of the reactor container (10) and selection of the volume flow of water discharged for partial flow return and partially still soiled, effects a defined velocity jump in the upwardly directed flow velocity of the water entering from the container bottom, wherein the border layer (19) forms clearly at a defined separation from the container bottom.

11. Method according to claim 10, **characterized in that** the volume flow of water discharged for partial flow return is adjusted to approximately 10 to 20%, preferably approximately 15% of the volume flow of the flowing-in untreated water.

12. Method according to claim 10 or 11 in connection with claim 6, **characterized in that** the sludge discharging pump (18) is switched on at predetermined times, preferably once a day, and for a predetermined period of time, e.g. for one hour, through the timer.

13. Method according to claim 10 or 11 in connection with claim 7, **characterized in that** a fixedly adjusted volume flow of sludge is discharged.

14. Method according to claim 10 or 11 in combination with claim 8, **characterized in that** the sludge discharging slider is controlled by the means for determining the height of the flock level (19) such that the border layer level is automatically maintained constant.

15. Method according to any one of the claims 10 through 14, **characterized in that** when the volume flow of water discharged for partial flow return changes, the volume flow of the untreated water flowing into the reactor container (10) is automatically adjusted and vice versa.

16. Use of the Upflow sludge blanket filtering plant according to any one of the claims 1 through 9 as clear cleaning step in a waste water treatment system instead of a final sedimentation tank.

## Revendications

1. Installation de filtres flottants sans charge de support pour la séparation d'impuretés particulaires d'une eau brute à traiter comportant au moins un récipient formant réacteur (10) dont la section transversale se rétrécit de préférence vers le bas en forme d'entonnoir, qui présente dans le domaine du fond une amenée d'eau brute (11) et dans le domaine supérieur du récipient formant réacteur (10) une évacuation d'eau clarifiée (14) par laquelle l'eau clarifiée débarrassée des impuretés particulaires peut être retirée du récipient formant réacteur (10) où, à distance du fond du récipient formant réacteur (10), il est prévu une évacuation de boue (17) par laquelle la boue accumulée dans le domaine du fond du récipient formant réacteur (10) peut être retirée du récipient formant réacteur (10), ainsi qu'un dispositif pour produire un saut de vitesse négatif dans la vitesse d'écoulement de l'eau brute additionnée d'impuretés particulaires qui s'écoule dans le récipient formant réacteur (10), et où le dispositif pour produire un saut de vitesse négatif est agencé de telle manière qu'il s'établit une couche limite (19) avec séparation entre l'eau brute additionnée d'impuretés particulaires qui s'écoule et l'eau clarifiée qui s'écoule au-dessus, **caractérisée en ce que**, entre l'évacuation de boue (17) et l'écoulement d'eau clarifiée (14), il est prévu dans le domaine de la couche limite (19) un dispositif (15) pour le retrait d'une eau encore partiellement souillée d'un domaine situé sous la couche limite (19) et pour le recyclage d'un courant partiel dans l'amenée d'eau brute (11).

2. Installation de filtres flottants selon la revendication 1, **caractérisée en ce que** l'évacuation de boue (17) est disposée à environ 1/4 à 1/2 de la hauteur du récipient formant réacteur (10), de préférence à environ 1/3 de la hauteur du récipient.

3. Installation de filtres flottants selon la revendication 1 ou 2, **caractérisée en ce que** le dispositif (15) pour le retrait d'une eau encore partiellement souillée est disposée à peu de distance au-dessus de l'évacuation de boue (17), de préférence à environ la moitié de la hauteur du récipient formant réacteur (10).

4. Installation de filtres flottants selon l'une des revendications précédentes, **caractérisée en ce qu'**il est prévu un dispositif pour la régulation du courant volumique du courant partiel d'eau encore partiellement souillée recyclé.

5. Installation de filtres flottants selon l'une des revendications précédentes, **caractérisée en ce qu'**une pompe d'évacuation de boue (18) est raccordée à l'évacuation de boue (17).

6. Installation de filtres flottants selon la revendication 5, **caractérisée en ce que** la pompe d'évacuation de boue (18) peut être mise en marche ou arrêtée par le biais dune horloge à minuterie.

7. Installation de filtres flottants selon l'une des revendications précédentes, **caractérisée en ce qu'**il est prévue un obturateur d'évacuation de boue qui peut limiter le courant volumique de la boue à évacuer.

8. Installation de filtres flottants selon la revendication 7, **caractérisée en ce qu'**un dispositif pour déterminer la hauteur de la couche limite (19) entre l'eau clarifiée et l'eau boueuse est relié à l'obturateur d'évacuation de boue.

9. Installation de filtres flottants selon l'une des revendications précédentes, **caractérisée en ce que** le récipient formant réacteur (10) présente une section transversale ronde.

10. Procédé pour séparer des impuretés particulaires d'une eau brute à traiter dans une installation de filtres flottants sans charge de support dans lequel, pendant le fonctionnement, un saut de vitesse négatif est produit dans la vitesse d'écoulement dune eau brute qui s'écoule dans un récipient formant réacteur (10), de sorte qu'il s'établit une couche limite (19) avec séparation entre l'eau brute additionnée d'impuretés particulaires qui s'écoule et l'eau clarifiée qui s'écoule au-dessus, où de l'eau clarifiée est retirée au-dessus de la couche limite (19) et de la boue accumulée dans le domaine du fond du récipient formant réacteur (10) est retirée au-dessous de celle-ci,
**caractérisé en ce que**:
un courant partiel de l'eau brute souillée ascendante est retiré à peu de distance au-dessous de la couche limite (19) et est réintroduit dans le domaine du fond du récipient formant réacteur (10), et **en ce que**, par le choix du courant volumique de l'eau encore partiellement souillée retirée pour le recyclage partiel du courant, il s'établit un saut de vitesse défini dans la vitesse d'écoulement dirigée vers le haut de l'eau qui entre depuis le fond du récipient, de sorte que la couche limite (19) se forme nettement à une distance définie du fond du récipient.

11. Procédé selon la revendication 10, **caractérisé en ce que** le courant volumique de l'eau retirée pour le recyclage partiel d'un courant est ajusté à environ 10 à 20 %, de préférence environ 15 % du courant volumique de l'eau brute entrante.

12. Procédé selon la revendication 10 ou 11 en liaison avec la revendication 6, **caractérisé en ce que** la pompe d'évacuation de boue (18) est mise en marche à des moments déterminés, de préférence une fois par jour, et pendant une durée prédéterminée, par exemple 1 heure par le biais de l'horloge à minuterie.

13. Procédé selon la revendication 10 ou 11 en liaison avec la revendication 7, **caractérisé en ce qu'**un courant volumique de boue établi de manière fixe est retiré.

14. Procédé selon la revendication 10 ou 11 en liaison avec la revendication 8, **caractérisé en ce que** l'obturateur d'évacuation de boue est commandé par le dispositif pour déterminer la hauteur du niveau de flocons (19) de telle manière que la hauteur de la couche limite est maintenue constante automatiquement.

15. Procédé selon l'une des revendications 10 à 14, **caractérisé en ce que**, lors dune modification du courant volumique de l'eau retirée pour le recyclage partielle d'un courant, le courant volumique de l'eau brute entrant dans le récipient formant réacteur (10) est adapté automatiquement et inversement.

16. Utilisation de l'installation de filtres flottants selon l'une des revendications 1 à 9 comme étage d'épuration par clarification dans une installation de traitement des eaux usées à la place d'un bassin de post-épuration.
